(19) Europäisches Patentamt
European Patent Office
Office européen des brevets

(11) Veröffentlichungsnummer: **0 019 224**
**A2**

(12) # EUROPÄISCHE PATENTANMELDUNG

(21) Anmeldenummer: 80102537.0

(22) Anmeldetag: 08.05.80

(51) Int. Cl.³: **C 07 F 9/34**

(30) Priorität: 16.05.79 DE 2919754

(43) Veröffentlichungstag der Anmeldung: 26.11.80 Patentblatt 80/24

(84) Benannte Vertragsstaaten: AT BE CH DE FR GB IT LI NL

(71) Anmelder: HOECHST AKTIENGESELLSCHAFT
Zentrale Patentabteilung Postfach 80 03 20
D-6230 Frankfurt/Main 80(DE)

(72) Erfinder: Felcht, Utz-Hellmuth, Dr.
Kaiserstrasse 99
D-6793 Bruchmühlbach(DE)

(54) **Verfahren zur Herstellung von 1-Halogen-1-oxo-delta 3-phospholenen.**

(57) 1-Halogen-1-Oxo-$\Delta^3$-phospholene werden in isomerenreiner Form hergestellt durch Umsetzung von Phosphortrihalogeniden, 1,2-Epoxiden und 1,3-Dienen im Molverhältnis 1 : mehr als 1 : mindestens gleich 1 ohne Isolierung einer Zwischenstufe bei erhöhter Temperatur. Die Verfahrensprodukte sind Zwischenprodukte für die Herstellung von Fungiziden, von Zusätzen für Mineralöle und Polymere, von Katalysatoren für die Herstellung von Polyurethanschäumen etc.

EP 0 019 224 A2

HOECHST AKTIENGESELLSCHAFT HOE 79/F 120 Dr.ME/a

Verfahren zur Herstellung von 1-Halogen-1-oxo-$\Delta^3$-phospholenen

1-Halogen-1-oxo-$\Delta^3$-phospholene der Formel I

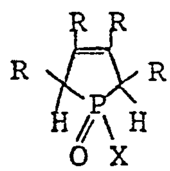

(I)

in welcher die Reste R, welche gleich oder verschieden sein können, Wasserstoff, organische Reste und/oder Halogen und X = Halogen bedeuten, stellen technisch interessante Verbindungen dar, die als Zwischenprodukte zur Herstellung von 1-Alkoxy(Aryloxy)-1-oxo-$\Delta^3$-phospholenen Bedeutung besitzen. 1-Alkoxy(Aryloxy)-1-oxo-$\Delta^3$-phospholene wiederum finden technisch Verwendung als Fungizide (vgl. DE-OS 19 56 187), als Zusätze für Mineralöle und Polymere (vgl. BE-PS 631 416) und als Katalysatoren für die Herstellung von Polyurethanschäumen /vgl. K. Hunger, Tetrah. Lett. 47, 5929 (1966)/. Zur Herstellung der 1-Halogen-1-oxo-$\Delta^3$-phospholene ist eine Reihe von Verfahren beschrieben worden. Dabei kann man im Prinzip drei Reaktionstypen unterscheiden.

$A_I$ Beim ersten Reaktionstyp wird ein Phosphortrihalogenid II direkt an 1,3-Diene III addiert und das entstehende Trihalogenphosphoran IV mit sauerstoffspendenden Substraten wie Wasser, Alkohol oder Aceton zum Phospholen gespalten (vgl. Gleichungen 1a und 1b):

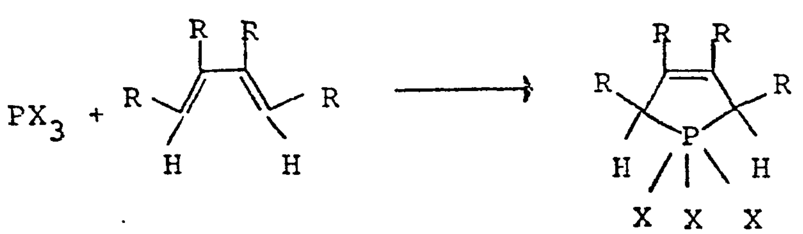

(1a)

(II) (III) (IV)

BAD ORIGINAL

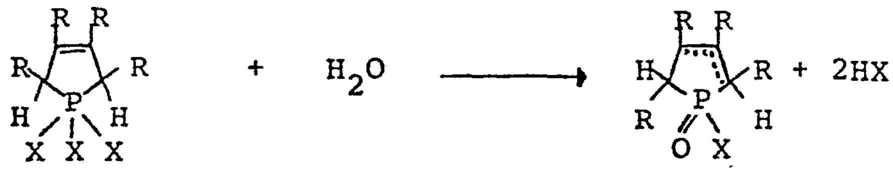 (1b)

(IV) (I)

In den Formeln der Gleichungen 1a und 1b besitzen R und X die eingangs bei Formel I angegebene Bedeutung.

Eine derartige Verfahrensweise ist z.B. beschrieben in der DE-PS 1 192 204 /weitere Lit.: U. Hasserodt, K. Hunger u. F. Korte, Tetrah. 1963 (19), 1563; B.A. Arbuzov u. A.O. Vizel, Dokl. Akad. SSSR (Engl. Transl.) 158 (5), 1047 (1964) und B.A., Arbuzov, A.O. Vizel, R.S. Giniyatullin u. Y.F. Tarenko, Izv. Akad. Nauk. SSSR, Ser. Khim. (Engl. Transl.) 1972 (8), 1786/. Für die technische Herstellung der 1-Halogen-1-oxo-$\Delta^3$-phospholene ist dieses Verfahren auf Grund des erforderlichen Zeitaufwands von mehreren Tagen bis zu einigen Wochen jedoch nicht geeignet. Zudem sind die Ausbeuten nicht zufriedenstellend, wodurch das Verfahren außerdem nicht wirtschaftlich genug ist. Besonders ungünstig ist die Tatsache, daß bei diesen Verfahren stets ein Gemisch von folgenden Isomeren bezüglich der Kohlenstoffdoppelbindung anfällt, was in Formel I in Gleichung 1b durch eine gestrichelte Schreibweise angedeutet ist.

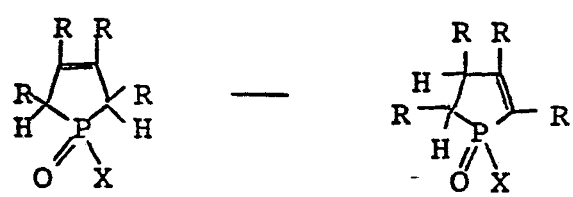

Derartige Gemische von $\Delta^3$-und $\Delta^2$-isomeren Phospholenen sind jedoch nur mit erheblichem Zeit- und Materialaufwand z.B. durch Destillation mit einer Drehbandkolonne zu trennen /K. Moedritzer, Syn. React. Inorg. Met.-Org. Chem., 5(1), 45(1975)/.

$B_I$ Beim zweiten Reaktionstyp geht man von Phosphorigsäurediestermonohalogeniden V aus, die sich mit Dienen entweder direkt oder über Zwischenstufen zu den 1-Halogen-1-oxo-phospholenen I umsetzen (vgl. Gl. 3, 4a und 4b):

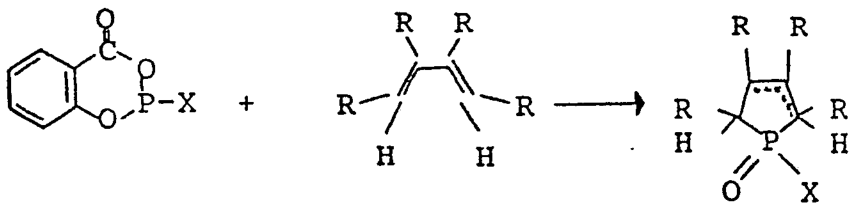
+ Harze (3)

(V) (III) (I)

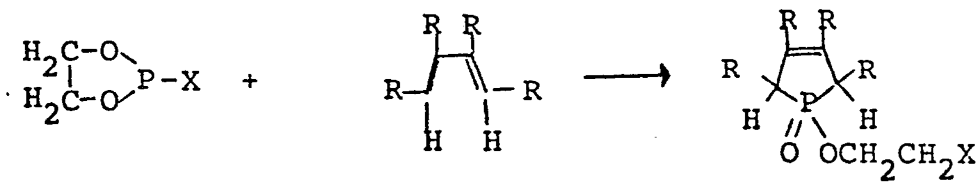
(4a)

(VI) (III) (VII)

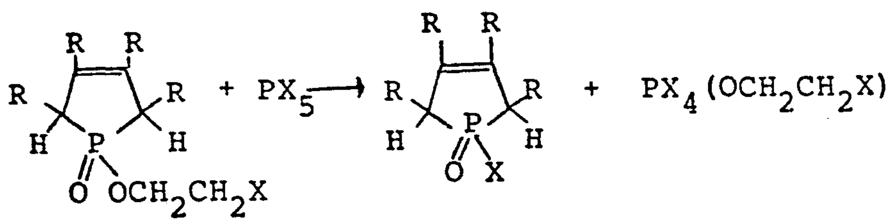

(4b)

(VII) (I)

In den Formeln besitzen R und X die eingangs bei Formel I angegebene Bedeutung. Für eine technische Herstellung der 1-Halogen-1-oxo-phospholene I sind beide Verfahren jedoch kaum geeignet.

Beim Verfahren nach Gleichung 3 ist sowohl der große Anfall von Herzstoffen, aber auch das Entstehen eines Gemisches von $\Delta^3$- und $\Delta^2$ - Isomeren von Nachteil. Zudem muß die Ausgangsverbindung in einer vorgeschalteten Reaktion zuerst aus Phosphortrihalogenid und Salicylsäure hergestellt werden, so daß es sich um eine mehrstufige Synthese handelt, die mit beträchtlichem Zeit-und Materialaufwand verbunden ist [vgl. B.A. Arbuzov, V.K. Krupnov u.A.O. Vizel, Izv. Akad. Nauk. SSSR, Ser. Khim. (Engl. Transl.) 1971 (6), 1233].

Das Verfahren nach Gleichungen 4a und 4b ist einerseits durch die mäßigen Ausbeuten von 40 - 60 %, andererseits durch die Mehrstufigkeit der Synthese nicht zufriedenstellend [vgl. N.A. Razumova u. A.A. Petrov Zh. Obsh. Khim. 33(3), 783 (1963)].

$C_I$ Beim dritten Reaktionstyp geht eine Reihe von Verfahren von Phosphorigsäuremonoesterdihalogeniden VIII aus, welche an 1,3-Diene addiert werden. Anschließend wird Alkylhalogenid abgespalten (vgl. Gleichung 5a und 5b):

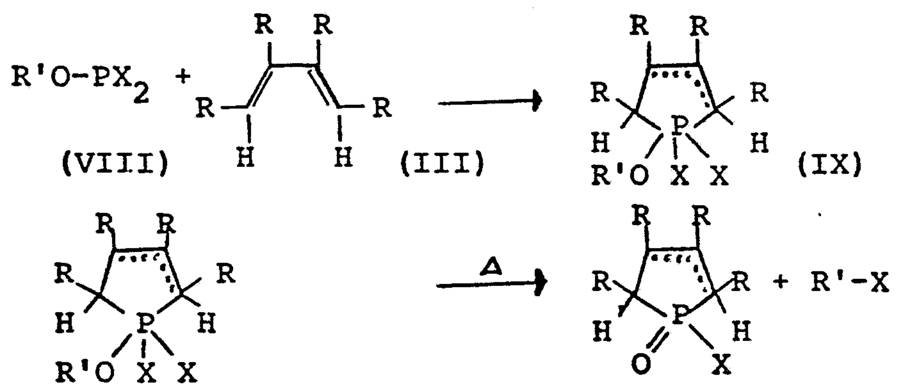

(VIII) (III) (IX) (5a)

(5b)

(IX) (I)

In den Formeln besitzen R und X die eingangs bei Formel I angegebene Bedeutung, R' steht für Alkyl oder halogensubstituiertes Alkyl.

Die Verfahren, bei denen R' = Alkyl ist, liefern zwar unter bestimmten Bedingungen isomerenreine 1-Halogen-1-oxo-$\Delta^3$-phospholene [vgl. B.A. Arbuzov, A.O. Vizel, Y.Y. Samitov u. Y.F. Tarenko, Izv. Akad. Nauk. SSSR, Ser. Khim. (Engl. Transl.) 1967(3), 648 sowie N.A. Razumova. L.I. Zubtsova u.A.A. Petrov, Zh. Obsh. Khim. (Engl. Transl.) 40(12), 2554 (1969)], jedoch sind die

Ausbeuten mit ca. 40 % nicht zufriedenstellend. Zusätzlich ist es in diesen Fällen von Nachteil, daß die Phosphorigsäure monoesterdichloride, in einer vorgelagerten Stufe erst nach bekannten Verfahren synthetisiert werden müssen, was mit erheblichem Zeit- und Materialaufwand verbunden ist (K. Sasse in: Houben-Weyl, Methoden der org. Chemie, G.Thieme Verlag, Stuttgart 1963, Bd. 12/2 S.13ff).

Nach dem in der DE-OS 19 56 187 beschriebenen Verfahren wird deshalb vorgeschlagen, die Reaktion so durchzuführen, daß man in einen Überschuß an Phosphortrichlorid zunächst Äthylenoxid, dann 1,3-Dien eingibt (siehe insbesondere Beispiel 8a). Dabei entsteht zuerst ein Phosphorigsäuremonoesterdichlorid, welches anschließend mit dem Dien reagiert (vgl. Gleichungen 6a - c):

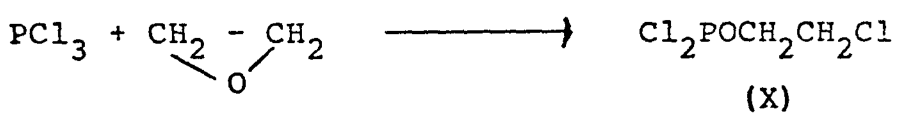

(X) (6a)

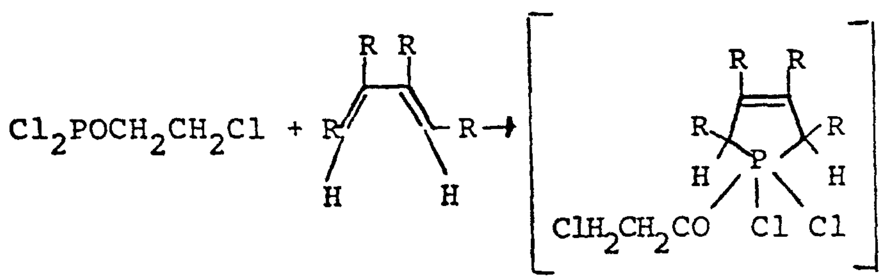

(X) (III) (XI) (6b)

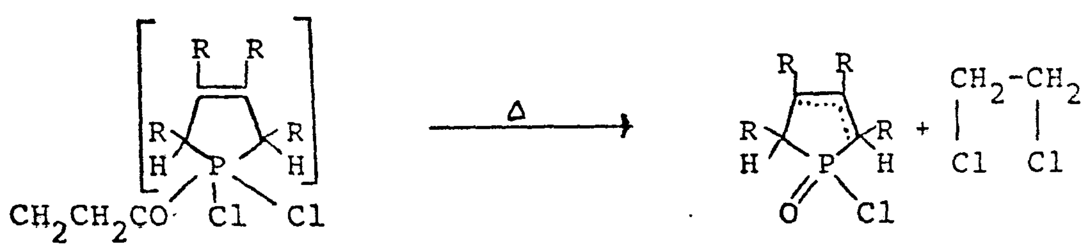

(XI) (I) (6c)

BAD ORIGINAL

In den Formeln besitzt R die eingangs bei Formel I angegebene Bedeutung.

Bei dieser Reaktionsführung kann auf die Isolierung des intermediär entstehenden Phosphorigsäure-ß-chloräthylesterdichlorids verzichtet werden und man erhält die 1-Halogen-1-oxophospholene I in einer Art "Eintopfverfahren" in mäßigen Ausbeuten (ca. 70 %). Es ist hierbei zusätzlich von Nachteil, daß nach Angaben der DE-OS 19 56 187, die durch eigene Versuche bestätigt wurden, stets ein Gemisch der beiden $\Delta^3$- und $\Delta^2$-1-Halogen-1-oxophospholene anfällt, was wiederum die oben geschilderten Trennprobleme aufwirft. (Vgl. Gleichung 2) Ein Gemisch dieser Isomeren erhält man auch, wenn das Phosphorigsäure-ß-chloräthylesterdichlorid durch Disproportionierung von Phosphorigsäure-tris(ß-chloräthylester) und Phosphortrichlorid in Gegenwart von 1,3-Dien erzeugt wird /K.Moedritzer, Syn. React. Inorg. Metal-Org. Chem. 5(1), 45 (1975); vgl. Gleichungen 7a und 7b/:

$$P(OCH_2CH_2Cl)_3 \;+\; 2\,PCl_3 \longrightarrow 3\;P(OCH_2CH_2Cl)Cl_2 \qquad (7a)$$

(XII) (XIII)

3 $P(OCH_2CH_2Cl)Cl_2$ +3

(XIII)

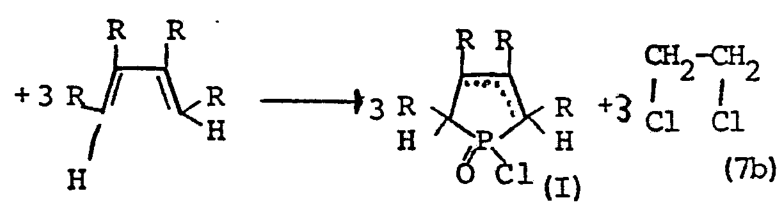

(I) (7b)

In dem Bestreben, ein Verfahren zu entwickeln, welches die isomeren reinen 1-Halogen-1-oxo-$\Delta^3$-phospholene in sehr guten Ausbeuten und wirtschaftlicher Verfahrensführung liefert, wurde nun überraschenderweise gefunden, daß sich dieses Ziel durch Umsetzung der in dem Verfahren der DE-OS 19 56 187 (vgl. Gleichungen 6a - c) verwendeten Ausgangsstoffe in genau definierten Mengenverhältnissen - nämlich mit einem Überschuß an 1,2-Epoxid- in einfacher und ausge-

BAD ORIGINAL

zeichneter Weise erreichen läßt.

Erfindungsgegenstand ist daher ein Verfahren zur Herstellung von 1-Halogen-1-oxo-$\Delta^3$-phospholenen durch Umsetzung von Phosphortrihalogeniden, 1,2-Epoxiden und 1,3-Dienen ohne Isolierung einer Zwischenstufe bei erhöhter Temperatur, das dadurch gekennzeichnet ist, daß man die Phosphortrihalogenide, die 1,2-Epoxide und die 1,3-Diene im Molverhältnis 1:>1:≥1 einsetzt. Die 1-Halogen-1-oxo-$\Delta^3$-phospholene entstehen bei dieser Verfahrensführung in isomerenreiner Form. Als Phosphortrihalogenide können für das erfindungsgemäße Verfahren im Prinzip alle möglichen Halogenide des dreibindigen Phosphors verwendet werden. Bevorzugt ist jedoch der Einsatz von Phosphortrihalogeniden der Formel

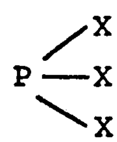

(II)

in welcher X=Fluor, Chlor, Brom oder Jod, vorzugsweise = Chlor oder Brom.

Als 1,2-Epoxide kommen im Prinzip alle Verbindungen mit dem Oxiransystem in Betracht; bevorzugt sind jedoch Verbindungen der Formel

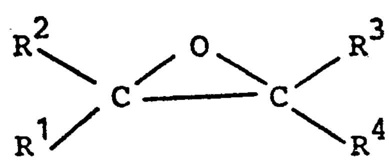

(XIV)

worin $R^1$, $R^2$, $R^3$, $R^4$ unabhängig voneinander = H, $(C_1-C_{12})$-Alkyl vorz. $(C_1-C_4)$-Alkyl, ggf. subst. durch Chlor und/oder Brom, $(C_5-C_7)$-Cycloalkyl oder Phenyl.

Beispielhafte Epoxide sind:

Äthylenoxid, Propylenoxid, Butylenoxid, 3-Chlorpropylenoxid, 3-Brompropylenoxid, Epoxycyclohexan, Epoxycycloheptan,

Styroloxid.

Sie sind nach bekannten Verfahren zugänglich (vgl. z.B. G. Dittus in Houben-Weyl, Methoden der Org. Chemie, G. Thieme Verlag Stuttgart 1965, Bd. 6/3, S. 371ff.). Bevorzugt sind Äthylenoxid, Propylenoxid und 3-Chlorpropylenoxid.

Als 1,3-Diene eigenen sich im Prinzip alle möglichen 1,3-Diene; bevorzugt sind jedoch Verbindungen der Formel:

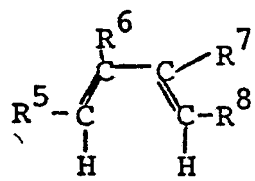

(III)

in welcher $R^5$-$R^8$ unabhängig voneinander

= H, ($C_1$-$C_{12}$)-Alkyl, vorzugsweise ($C_1$-$C_4$)-Alkyl
ggf. subst. durch Cl und/oder Br
Cyclopentyl, Cyclohexyl ) ggf. subst. durch
Phenyl, Naphthyl ) Cl, Br, ($C_1$-$C_4$)-Alkyl
und/oder ($C_1$-$C_4$)-Alkoxy

Chlor oder Brom.

Geeignete konkrete Diene sind z.B. Butadien, Isopren, Dimethylbutadien, Chloropren, 1-Methylbutadien, 1-Phenylbutadien. Besonders bevorzugt sind Butadien, Isopren und 2,3-Dimethylbutadien.

Das Verfahren kann sowohl in einem (gegenüber den Ausgangs- und Endstoffen) inerten Lösungsmittel als auch ohne ein solches durchgeführt werden. Brauchbare inerte Lösungsmittel sind z.B. chlorierte Kohlenwasserstoffe, insbesondere solche mit 1 oder 2 C-Atomen wie Methylenchlorid, Chloroform oder Di- bzw. Trichloräthan; sowie aliphatische und aromatische Kohlenwasserstoffe, insbesondere solche

mit 5-8 C-Atomen, wie z.B. Heptan, Hexan, Pentan oder Benzingemische mit ($C_5$-$C_8$)-Aliphaten, Benzol, Toluol, Xylol etc.

Formelmäßig läßt sich das erfindungsgemäße Verfahren, wenn Phosphortrihalogenide der Formel II, 1,2-Epoxide der Formel XIV und Diene der Formel III eingesetzt werden, durch folgende Reaktionsgleichung wiedergeben:

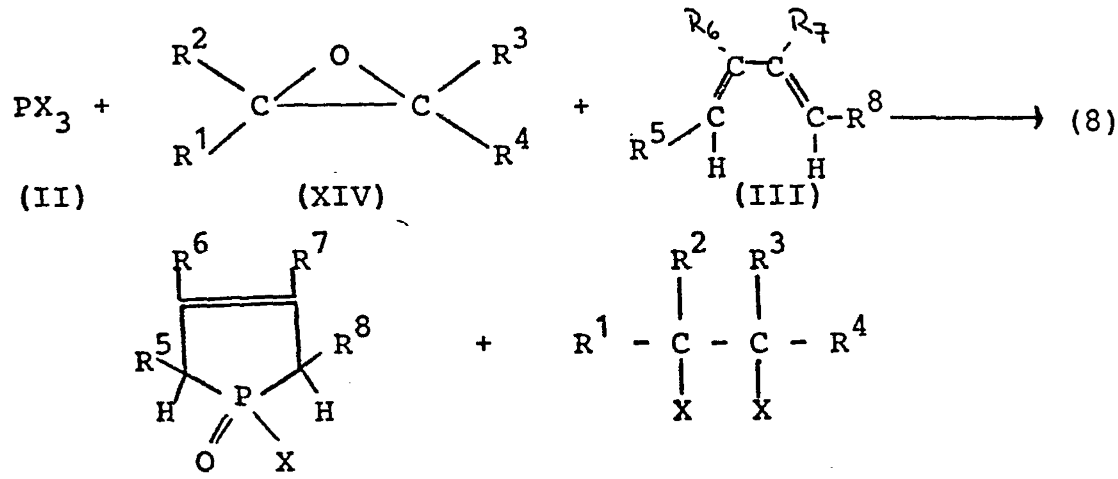

(II) (XIV) (III) (8)

(I)

Das erfindungsgemäße Verfahren kann in einem relativ breiten Temperaturbereich durchgeführt werden. Allgemein wird bei Temperaturen von etwa +50°C bis 200°C, vorzugsweise von etwa 80 - 140°C gearbeitet. Die Reaktionsdauer liegt im allgemeinen zwischen etwa 3 und 10 Stunden, insbesondere bei etwa 5 - 8 Stunden. Das Verfahren wird im allgemeinen unter Inertgasathmosphäre durchgeführt. Als Inertgase kommen hauptsächlich Stickstoff und Argon in Frage, jedoch genügt es auch - wenn gasförmige oder leicht flüchtige Diene wie z.B. Butadien für die Reaktion verwendet werden - den Gasraum im Reaktionsgefäß durch einen Überschuß an Dien zu spülen. Das Verhältnis von Lösungsmittel (wenn ein solches verwendet wird) zur Summe der Reaktionspartner kann in einem relativ weiten Bereich variiert werden.

Allgemein wird ein Gewichtsverhältnis von etwa 1:1 bis 10:1 (Lösungsmittel : Summe der Reaktionspartner) verwendet. In den Fällen, wo flüssige Reaktionspartner eingesetzt werden, wird jedoch auf die Verwendung von Lösungsmitteln vorteilhaft verzichtet, weil so eine bessere Raumausnutzung erreicht wird.

Allgemein wird derartig verfahren, daß die Reaktionspartner gemischt und gemeinsam erhitzt werden, oder einer der Ausgangsstoffe, bevorzugt das 1,3-Dien auf Grund seiner Flüchtigkeit, zuletzt in das Reaktionsgemisch der übrigen Komponenten eingeleitet oder zugetropft wird. Prinzipiell ist die Reihenfolge der Zugabe der Reaktionspartner jedoch nicht kritisch.

Bei der Reaktion ist es ferner zweckmäßig, die beiden Reaktionspartner Phosphortrihalogenid und 1,3-Dien im Molverhältnis von etwa 1:1 einzuseten, jedoch kann das Dien auch im Überschuß vorliegen. Das Molverhältnis von Phosphortrihalogenid zum verwendeten Epoxid muß dagegen 1: mehr als 1, vorteilhafter 1:/1,05 bis 1,2/ betragen, da bei einem Unterschuß an 1,2-Epoxid nur ein Gemisch der beiden $\Delta^2$- und $\Delta^3$-Isomeren entsteht. Bei Verwendung eines prinzipiell möglichen Unterschusses an Dien wird zusätzlich Phosphorigsäure-ß-halogen-äthylesterdihalogenid aus dem Reaktionsgemisch isoliert. Die Reaktion wird im allgemeinen unter Druck durchgeführt, wobei der Druck im Reaktionsgefäß dem Dampfdruck der flüchtigen Komponenten bei der betreffenden Temperatur entspricht. Dem Reaktionsgemisch werden ferner im allgemeinen Polymerisationsinhibitoren in Mengen von etwa 0,1-1 Gew.-%, bezogen auf das Gesamtgewicht des Reaktionsansatzes, zugegeben. Die Zweckmäßigkeit der Zugabe von derartigen Inhibitoren wie z.B. Kupferstearat, Phenothiazin oder tert.-Butylbrenzkatechin bei Reaktionen zwischen Phosphorchloriden und 1,3-Dienen ist bekannt (vgl. Houben-Weyl, Methoden der org. Chemie, G. Thieme Verlag Stuttgart 1963, Bd. 14/1).

Nach Beendigung der Reaktion wird das 1-Halogen-1-oxo-$\Delta^3$-phospholen durch bekannte Methoden wie z.B. Destillation unter vermindertem Druck von dem eventuell verwendeten Lösungsmittel und dem als Nebenprodukt entstandenen 1,2-Dihalogenalkan befreit. Die so erhaltenen 1-Halogen-1-oxo-$\Delta^3$-phospholene kristallisieren dann im allgemeinen in reiner Form aus. Eine weitere Reinigung ist an sich nicht erforderlich, kann aber, wenn es gewünscht wird, nach bekannten Methoden, z.B. Destillation unter vermindertem Druck oder Sublimation, durchgeführt werden.

Die Möglichkeit, durch einen geringen Überschuß an verwendetem 1,2-Epoxid isomerenfreie 1-Halogen-1-oxo-$\Delta^3$-phospholene in sehr guten Ausbeuten zu isolieren, war ausserordentlich überraschend, da in keiner Weise zu erwarten war, daß durch diese an sich einfache Maßnahme ein derartiger Erfolg erzielt werden kann. Wie durch bekannte Verfahren und eigene Versuche nachgewiesen ist, liefert nämlich bei Verwendung der gleichen Ausgangsverbindungen die Reaktion mit stöchiometrischen Mengen an Reaktionspartnern stets ein nur mit erheblichen Zeit- und Arbeitsaufwand trennbares Isomerengemisch von 1-Halogen-1-oxo-$\Delta^3$-phospholen und 1-Halogen-1-oxo-$\Delta^2$-phospholen /vgl. DE-OS 19 56 187 sowie K. Moedritzer, Syn. React. Inorg. Metal-Org. Chem. 5(1), 45 (1975)/. Die Erfindung stellt daher auch einen erheblichen Fortschritt dar.

Die Erfindung wird nun durch die folgenden Beispiele näher erläutert.

Beispiel 1

In einen 1 l Glasautoklav mit Rührung werden 206 g (1,5 mol) Phosphortrichlorid und 0,5 g Kupferstearat gefüllt. Unter Rühren werden nacheinander 70 g (1.59 mol) Äthylenoxid und 82 g (1.52 mol) Butadien eingeleitet. Sodann wird 8 h auf 100°C und 1 h auf 110°C erhitzt, abgekühlt, entspannt und 1.2-Dichloräthan bis 80°C Badtemperatur bei $1{,}6 \cdot 10^{-2}$ bar abgezogen. Destillation des Rückstandes liefert 188 g (91,8 % d.Th.). 1-Chlor-1-oxo-$\Delta^3$-phospholen vom Kp=82 - 84°C/$1{,}0 \cdot 10^{-3}$ bar, welches nach gaschromatographischer und $^1$H-NMR-spektroskopischer Analyse kein $\Delta^2$-Isomer enthält.

Vergleichsbeispiel VB1 zu Beispiel 1:

Beispiel 1 wird wiederholt, wobei jedoch nur 66 g (1,5 mol) Äthylenoxid verwendet werden. Aufarbeitung und Destillation liefern 171 g (83,5 %) eines Gemisches aus 1-Chlor-1-oxo-$\Delta^3$-phospholen und 1-Chlor-1-oxo-$\Delta^2$-phospholen, welches nach gaschromatographischer und $^1$H-NMR-spektroskopischer Analyse aus 73 % $\Delta^3$- und 27 % $\Delta^2$-Isomer besteht.

Vergleichsbeispiel VB2 zu Beispiel 1:

Beispiel 1 wird wiederholt, wobei jedoch nur 60 g (1,36 mol) Äthylenoxid verwendet werden. Aufarbeitung und Destillation liefern 166 g (81,0 %) eines Gemisches aus 1-Chlor-1-oxo-$\Delta^3$-phospholen und 1-Chlor-1-oxo-$\Delta^2$-phospholen, welches nach gaschromatographischer und $^1$H-NMR-spektroskopischer Analyse aus 21 % $\Delta^3$- und 79 % $\Delta^2$-Isomer besteht.

Das Beispiel 1 und die Vergleichsbeispiele VB1 und 2 zeigen, daß beim Einsatz eines geringen Überschusses an Äthylenoxid gegenüber der verwendeten Menge an Phosphortrichlorid einerseits die Ausbeute an 1-Chlor-1-oxo-$\Delta^3$-phospholen erhöht, andererseits die Isomerisierung zu

$\Delta^2$-Phospholen vollständig unterdrückt wird.

Beispiel 2:

Beispiel 1 wird wiederholt, wobei jedoch 108 g (2.0 mol) Butadien eingesetzt werden. Aufarbeitung und Destillation liefern 185 g (90.4 %) 1-Chlor-1-oxo-$\Delta^3$-phospholen vom Kp = 82°C/1.0 · $10^{-3}$ bar, welches nach gaschromatographischer und $^1$H-NMR-spektroskopischer Analyse kein $\Delta^2$-Isomer enthält.
Der Vergleich der Beispiele 1 und 2 zeigt, daß auch ein größerer Überschuß an 1,3-Dien nicht kritisch bezüglich der Ausbeute und der Isomerenreinheit des 1-Chlor-1-oxo-$\Delta^3$-phospholens ist.

Beispiel 3:

In eine Druckflasche werden 110 g (0,8 mol) Phosphortrichlorid und 0,1 g Kupferstearat gefüllt. Unter Rühren werden nacheinander 38 g (0,86 g mol) Äthylenoxid eingeleitet und 61 g (0,9 mol) Isopren zugetropft. Sodann wird 6h auf 110°C erhitzt, abgekühlt und 1,2-Dichloräthan bis 80°C Badtemperatur bei 1,6·$10^{-2}$ bar abgezogen. Destillation des Rückstandes liefert 103 g (85,5 % d.Th.) 1-Chlor-3-methyl-1-oxo-$\Delta^3$-phospholen vom Kp=101-103°C/6,7·$10^{-5}$ bar, welches nach $^1$H-NMR-spektroskopischer Analyse kein $\Delta^2$-Isomer enthält.

Vergleichsbeispiel VB 3 zu Beispiel 3:

Beispiel 3 wird wiederholt, wobei jedoch nur 35.2 g (0.80 mol) Äthylenoxid verwendet werden. Aufarbeitung und Destillation liefern 92 g (76,4 % d.Th.) eines Gemisches aus 1-Chlor-3-methyl-1-oxo-$\Delta^3$-phospholen und 1-Chlor-3-methyl-1-oxo-$\Delta^2$-phospholen, welches nach $^1$H-NMR-spektroskopischer Analyse aus 86 % $\Delta^3$- und 14 % $\Delta^2$-Isomer besteht.

Vergleichsbeispiel VB 4 zu Beispiel 3:

Beispiel 3 wird wiederholt, wobei jedoch nur 33 g (0,75 mol) Äthylenoxid verwendet werden. Aufarbeitung und Destillation liefern 88g (73.1 % d.Th.) 1-Chlor-3-methyl-1-oxo- $\Delta^2$-phospholen, welches nach $^1$H-NMR-spektroskopischer Analyse kein $\Delta^3$-Isomer enthält.

Das Beispiel 3 und die Vergleichsbeispiele VB 3 und 4 zeigen, daß bei der Verwendung von Isopren als 1,3-Dien bereits beim Einsatz eines geringen Unterschusses an Äthylenoxid vollständige Isomerisierung zum 1-Chlor-3-methyl-1-oxo- $\Delta^2$-phospholen eintritt, was die Bedeutung des erfindungsgemäßen Verfahrens zur Darstellung von isomerenreinen 1-Chlor-3-methyl-1-oxo- $\Delta^3$-phospholen unterstreicht.

Beispiel 4:

In einen 1-l-Glasautoklav mit Rührung und Umlaufkühlung werden 460 g (1,5 mol) Phosphortribromid und 0,5 g Kupferstearat gefüllt. Unter Wasserkühlung und Rühren werden nacheinander 70 g (1,59 mol) Äthylenoxid und 82 g (1,52 mol) Butadien eingeleitet. Sodann wird 4 h auf 100°C erhitzt, abgekühlt, entspannt und 1,2-Dibromäthan bis 100°C Badtemperatur bei $1{,}6\cdot10^{-2}$ bar abgezogen. Destillation des Rückstandes liefert 186 g (68,5 % d.Th.) 1-Brom-1-oxo-$\Delta^3$-phospholen vom Kp = 110-112°C/$6{,}7\cdot10^{-5}$ bar, welches nach $^1$H-NMR-spektroskopischer Analyse kein $\Delta^2$-Isomer enthält.

Beispiel 5:

In einen 1-l-Glasautoklav mit Rührung werden 206 g (1,5 mol) Phosphortrichlorid und 0,5 g Kupferstearat gefüllt. Unter Rühren werden nacheinander 70 g (1,59 mol) Äthylenoxid eingeleitet und 130 g (1,58 mol) 2,3-Dimethylbutadien

zugetropft. Sodann wird 6 h auf 100°C erhitzt, abgekühlt, entspannt und 1,2-Dichloräthan bis 80°C Badtemperatur bei $1,6 \cdot 10^{-2}$ bar abgezogen. Destillation des Rückstandes liefert 217 g (87,9 % d.Th.) 1-Chlor-3,4-dimethyl-1-oxo-$\Delta^3$-phospholen vom Kp=102°C/$6,7 \cdot 10^{-5}$ bar, welches nach $^1$H-NMR-spektroskopischer Analyse kein $\Delta^2$-Isomer enthält.

Beispiel 6:

In einem 1-l-Glaskolben mit Rührer, Intensivkühler und Gaseinleitungsrohr werden 206,5 g (1,5 mol) Phosphortrichlorid und 0.5 g Kupferstearat gefüllt. Unter Wasserkühlung werden nacheinander 70 g (1,59 mol) Äthylenoxid eingeleitet und 130 g (1,58 mol) 2,3-Dimethylbutadien zugetropft. Sodann wird unter Rühren auf 70°C erhitzt. Mit abnehmendem Rückfluss wird innerhalb 3 h bis auf 100°C Innentemperatur aufgeheizt und 2 h bei dieser Temperatur gehalten. Nach Abkühlen wird 1,2-Dichloräthan bis 80°C Badtemperatur bei $1,6 \cdot 10^{-2}$ bar abgezogen. Destillation des Rückstandes liefert 218 g (88,3 % d.Th.) 1-Chlor-3,4-dimethyl-1-oxo-$\Delta^3$-phospholen vom Kp=100-102°C/$6,7 \cdot 10^{-5}$ bar, welches nach $^1$H-NMR-spektroskopischer Analyse kein $\Delta^2$-Isomer enthält.

Der Vergleich der Beispiele 5 und 6 zeigt, daß bei langsamer Temperaturerhöhung das Verfahren ohne Ausbeuteverminderung auch drucklos durchgeführt werden kann.

Beispiel 7:

Beispiel 5 wird wiederholt, nur daß statt Äthylenoxid 91,6 g (1,58 mol) Propylenoxid verwendet werden. Nach Abkühlen wird dann bis 100°C Badtemperatur bei $1,6 \cdot 10^{-2}$ bar 1,2-Dichlorpropan abgezogen. Destillation des Rückstandes liefert 215 g (87,1 % d.Th.) 1-Chlor-3,4-dimethyl-1-oxo-$\Delta^3$-phospholen, welches nach $^1$H-NMR-spektroskopischer Analyse kein $\Delta^2$-Isomer enthält.

BAD ORIGINAL

Vergleichsbeispiel VB 5 zu Beispiel 7:

Beispiel 7 wird wiederholt, wobei jedoch nur 84,5 g (1,45 mol) Propylenoxid verwendet werden. Aufarbeitung und Destillation liefern 150 g (60,8 %) d.Th. eines Gemisches aus 1-Chlor-3,4-dimethyl-1-oxo-$\Delta^3$-phospholen und 1-Chlor-3,4-dimethyl-1-oxo-$\Delta^2$-phospholen, welches nach $^1$H-NMR-spektroskopischer Analyse aus 78 % $\Delta^3$- und 22 % $\Delta^2$-Isomer besteht.

Der Vergleich der Beispiele 5,7 und des Vergleichsbeispiels VB 5 zeigt, daß einerseits beliebige 1,2-Epoxide in dem erfindungsgemäßen Verfahren ohne Ausbeuteminderung anwendbar sind, andererseits auch mit Propylenoxid nur beim Einsatz eines Überschußes ein isomerenfreies Produkt erhalten wird.

Beispiel 8:

Beispiel 7 wird wiederholt, nur daß die Reihenfolge der Zugabe von Propylenoxid und 2,3-Dimethylbutadien vertauscht wird. Aufarbeitung und Destillation liefern 213 g (86,3 %) 1-Chlor-3,4-dimethyl-1-oxo-$\Delta^3$-phospholen, welches nach $^1$H-NMR-spektroskopischer Analyse kein $\Delta^2$-Isomer enthält.

Der Vergleich der Beispiele 7 und 8 zeigt, daß die Reihenfolge der Zugabe der einzelnen Reaktionspartner nicht kritisch bezüglich der Ausbeute und der Isomerenreinheit des erhaltenen 1-Chlor-3,4-dimethyl-1-oxo-$\Delta^3$-phospholens ist.

Beispiel 9:

In einen 5-l-Emailledruckreaktor werden 1856 g (13,5 mol) Phosphortrichlorid und 3,0 g Kupferstearat gefüllt. Unter Rühren und Umlaufkühlung werden nacheinander 600 g (13,6 mol) Äthylenoxid und 756 g (14,0 mol) Butadien eingeleitet.

Sodann wird 5h auf 90°C, 5h auf 100°C und 2h auf 110°C geheizt. Nach Abkühlen, Entspannen und Entnahme des Reaktionsgemisches wird 1,2-Dichloräthan bis 80°C Badtemperatur bei $1,6 \cdot 10^{-2}$ bar abgezogen. Destillation des Rückstandes mittels eines Dünnschichtverdampfers liefert 1714 g (93 % d.Th.) 1-Chlor-1-oxo-$\Delta^3$-phospholen vom Kp=82-85°C/ $1,0 \cdot 10^{-3}$bar, welches nach $^1$H-NMR-spektroskopischer und gaschromatographischer Analyse kein $\Delta^2$-Isomer enthält.

Patentansprüche:

1. Verfahren zur Herstellung von 1-Halogen-1-oxo-$\Delta^3$-phospholenen durch Umsetzung von Phosphortrihalogeniden, 1,2-Epoxiden und 1,3-Dienen ohne Isolierung einer Zwischenstufe bei erhöhter Temperatur, dadurch gekennzeichnet, daß man die Phosphortrihalogenide, die 1,2-Epoxide und die 1,3-Diene im Mol-Verhältnis von 1: mehr als 1: mindestens gleich 1 einsetzt.

2. Verfahren nach Anspruch 1, dadurch gekennzeichnet, daß man als Phosphortrihalogenide Verbindungen der Formel II

$$PX_3 \qquad \text{(II)},$$

worin X = FCl, Br, oder J, vorzugsweise Cl oder Br, verwendet.

3. Verfahren nach den Ansprüchen 1 bis 2, dadurch gekennzeichnet, daß man als 1,2-Epoxide Verbindungen der Formel XIV

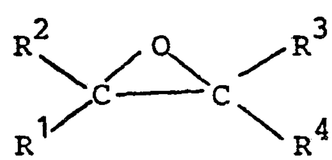

(XIV),

worin $R^1$, $R^2$, $R^3$ und $R^4$ unabhängig voneinander = H, $(C_1-C_{12})$-Alkyl, vorzugsweise $(C_1-C_4)$-Alkyl, gegebenenfalls substituiert durch Chlor und/oder Brom, $(C_5-C_7)$-Cycloalkyl oder Phenyl, verwendet.

4. Verfahren nach den Ansprüchen 1 bis 3, dadurch gekennzeichnet, daß man als 1,3-Diene Verbindungen der Formel III

BAD ORIGINAL

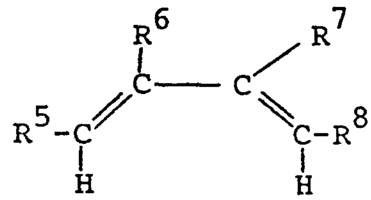

(III),

worin $R^5$, $R^6$, $R^7$ und $R^8$ unabhängig voneinander=H, $C_1$-$C_{12}$-Alkyl, vorzugsweise ($C_1$-$C_4$)-Alkyl, gegebenenfalls substituiert durch Chlor und/oder Brom, Cyclopentyl, Cyclohexyl ) Phenyl, Naphthyl ) gegebenenfalls subst. durch Cl, Br, ($C_1$-$C_4$)-Alkyl und/oder ($C_1$-$C_4$-Alkoxy und Chlor oder Brom ab verwendet.

5. Verfahren nach den Ansprüchen 1 bis 4, dadurch gekennzeichnet, daß man die Umsetzung bei Temperaturen zwischen etwa 50 und 200°C, vorzugsweise zwischen etwa 80 und 140°C durchführt.